# EUROPEAN PATENT APPLICATION

(11) **EP 2 378 744 A1**
(43) Date of publication of application: **19.10.2011**
(21) Application number: 10002857.0
(22) Date of filing: 18.03.2010
(51) Int. Cl.: H04M 1/05, H04M 1/60, H04M 1/02

(54) **Communication item as a pendant on a necklace**

(71) Applicant: novero GmbH, 40468 Düsseldorf (DE)
(72) Inventor: Schmitz, Uwe, 40229 Düsseldorf (DE); Jansen, Ralf, 45527 Hattingen (DE)
(74) Representative: Gesthuysen, von Rohr & Eggert

(57) **Abstract**

The invention relates to a communication item in the form of a pendant (1) on a necklace (14), wherein a communication module is integrated into the communication item and the communication module comprises at least a core element (8) and a speaker (17) and optionally a microphone (16). The pendant (1) comprises a housing (5) with at least the core element (8) of the communication module positioned in the housing (5). The housing (5) is provided with at least one mechanical interface (12, 12') connecting the housing (5) to the necklace (14). The necklace (14) in a front view defines a first branch (18) on one side of the pendant (1) and a second branch (19) on the opposite side of the pendant (1). The speaker (17) is positioned in one branch of the necklace (14) and a lead wire (20) is integrated into the necklace (14), the lead wire (20) running from the speaker (17) through the mechanical interface (12) to the core element (8) in the housing (5). For actual use the speaker (17) while still connected to the lead wire (20) can be dislodged from the necklace (14) and put into or close to the ear of a user generally without moving the pendant (1).

## Description

The present invention relates to a communication item in the form of a pendant on a necklace, in particular a communication item with the features according to the preamble of claim 1.

In the prior art there is provided a communication and jewelry item in the form of a pendant on a necklace (US 2008/0161023 A1). The pendant has a housing comprising a front cover carrying a decorative jewelry component like a pearl and a rear cover connected to the front cover. An ear-plug extends outwardly from the rear surface of the rear cover. The jewelry component on the front cover usually faces away from the bearer while the rear cover with the ear-plug usually faces towards the bearer.

Inside the housing there is a core element of a communication module. The housing has wall openings as access points for functional elements of the core element, i.e. volume control keys, a switch key, and indicating light as well as a power jack.

The necklace carrying the pendant has a first joining member attached to a first end of the necklace and a second joining member attached to the second end of the necklace. The two joining members together form the closure of the necklace. In the necklace a lead wire is disposed connecting the pendant to a microphone disposed in the second joining member of the closure.

The lead wire connects the microphone to the core element in the housing of the pendant. A speaker in the ear-plug on the rear cover of the pendant is electrically connected to the core element.

The necklace has a double function, first to carry the pendant around the neck of the bearer, second to connect the microphone in the closure to the core element.

The core element in the housing of the pendant is part of a communication module to send/receive short-range wireless signals, in particular in the Bluetooth standard.

Such a jewelry item can be worn on the neck naturally if no communication is intended. As the distance between the microphone and the ear-piece and the distance between mouth and ear of the bearer are almost the same, the device can be used for communication easily when the ear-plug is inserted into the ear.

The jewelry component on the front cover of the housing can have any design. It can be a specific type of surface of the front cover also. Likewise, the necklace can be simple and basic, e.g. a leather string, or can be more sophisticated, e.g. decorated with pearls or other jewelry or costume jewelry elements.

A further prior art (WO-A1-2008/156693) discloses a wireless headset designed as an ear-ring or ear-piece with a decorative component like a jewelry component on a front face and the components of a wireless communication link in or on a housing of the ear-piece. This prior art contains extensive information about the components and the technology of such an item.

The prior art can be considered to be applicable with all kinds of short-range wireless communication standards (Bluetooth, Wi-Fi, IR etc.), and also with future standards still to be developed (see also Weyers: "Integrated Circuits for a WPAN System", Verlag Dr. Hut, Munich 2010, ISBN 978-3-86853-355-2).

A further prior art (JP-A-2004-180252) describes a decorative fitting for an ear-phone cord of a music player like an MP-3-player. In the actual embodiment shown in this prior art a chain of pearls is used on the lead wire from the plug of the ear-phone cord to the speakers.

In general, the teaching of the present invention is preferably applicable to a communication item with decorative elements. However, the invention is applicable also to a plain item without decorative elements.

The object of the present invention is to improve the usability of a communication item in the form of a pendant on a necklace, in particular if this communication item is provided with a decorative component.

Above mentioned object is achieved by a communication item comprising the features of the preamble of claim 1 together with the features of the characterizing part of claim 1.

For the purpose of this patent application a number of terms used are defined as follows:
A "jewelry item" includes true jewelry items as well as costume jewelry items and generally decorative items. In particular a jewelry item can be a chain, a pendant, a necklace, a choker, an ear-clip, an ear-ring, or the like.

A jewelry item has at least two "components", namely a mechanical carrier component and a decorative component. A decorative component itself can have one element or a number of elements (e.g. a chain of pearls having a large number of pearls).

A "communication module" is understood on the one hand as an item that has an extensive data storage memory and at least one data communication interface to receive data for storage and/or to transmit data to a speaker, i.e. has the functionality of e.g. an MP-3 player. On the other hand and preferably the communication module is a short-range wireless communication item. Preferably, however not exclusively, this term refers to a Bluetooth module. Other types use e.g. Wi-Fi or IR communication links or other standards (see the prior art mentioned above).

The communication module comprises a number of components, e.g. a core element with a chipset (electronic circuitry), a microphone (frequently, but not necessarily integrated in the core element; and obviously not necessary where only audio functions for listening are used as in an MP-3 player or the like). A speaker (for mono applications) or two speakers can be integrated as well. Necessarily, the communication module comprises a battery pack, mostly rechargeable, which is frequently but not necessarily integrated into the core element. The core element also comprises user interface elements.

A "wireless personal communication system" comprises at least one communication module and at least one "base unit" remote from the communication module, in particular, but not exclusively a mobile phone or a personal digital assistant. The base unit is connected to the communication module by a "short-range wireless communication link" (Bluetooth, Wi-Fi, IR etc.; WPAN-system). A short-range wireless communication link typically permits communication up to a distance of 10 to 20 m.

An "access point" on the housing isn't necessarily an opening. It may also be a closed area of the housing if a contactless operation of a functional element is provided for.

The term "generally without moving the pendant" means that the pendant should stay in place if the speaker is moved from its rest position to the use position. However, a minor displacement of the pendant is usually unavoidable due to the movement of the user as such.

In contrast to the prior art forming the starting point of the invention, where the speaker is directly positioned on the pendant on the necklace, in the inventive communication item the speaker is positioned in one branch of the necklace and a lead wire is integrated into the necklace. For actual use, while still connected to the lead wire, the speaker can be dislodged from the necklace and put into or close to the ear of a user generally without moving the pendant. The pendant can remain where it usually is, namely below the user's chin. The use of the speaker of the communication item is extremely comfortable.

The inventive communication item in the form of a pendant on a necklace is comfortable for an item that has an extensive data storage memory like a music player (as an MP-3 player). Of particular interest, however, is a communication item according to the invention where the communication module is a short-range wireless communication item as used for a headset communicating with a base unit remote from the communication module (e.g. a mobile phone or a PDA).

The general idea of the invention can be realized with a communication item with no specific decorative components, let alone any decorative jewelry component. However, it is a preferred version of the invention that combines a decorative component with the mechanical carrier component.

In a preferred embodiment of the invention the pendant comprises the housing and at least one decorative component which is separate from, but mechanically connected to a front side of the housing or is formed directly on the housing.

An additional idea of the invention is to split such a jewelry communication item into two basic components. On the one hand there is a probably custom-made component which includes the decorative component. On the other hand, the electronic parts of the communication item can be manufactured in mass production at a low price.

The present invention may be used with a technical architecture with a platform that is designed in a way to provide dedicated interfaces between the technical components on the one hand and the decorative components on the other hand.

The decorative component follows the rules of jewelry production or, in a more decorative part, of costume jewelry items or the like. All or at least the major components of the communication module, however, are manufactured in high volumes independent of any variance or style.

The inventive platform technology allows a late assembly of the communication module on the one hand and the jewelry on the other hand.

In a further preferred version of the invention also the necklace comprises a mechanical carrier component, preferably in the form of a suspension strand, and preferably a decorative component, preferably on the mechanical carrier component.

Finally, in a further version of the invention the speaker is constructed as or provided with a decorative component.

Usually, the housing will have a rear cover and a front cover with the core element of the communication module being fixed between the covers. The housing will be provided with mechanical interfaces for connecting to other components of the item. Of course, the item also needs electrical interfaces at the appropriate locations.

It depends on the specific type of the item whether integrating a microphone of the communication module into the core element or at least positioning this microphone in the housing is a feasible construction under communication aspects.

In a preferred embodiment of the invention the housing is provided with a first mechanical interface providing a generally fixed connection to one end of the necklace and with a second mechanical interface providing a detachable connection to the other end of the necklace. The closure of the necklace is here preferably not at the neck but at the pendant, in particular and preferably by a magnetic joint forming the detachable connection.

The term "generally fixed" means that the connection is not detachable in day to day use of the item. It should be possible, however, to open this connection for service or repair, in particular using an appropriate tool. The term "detachable" connection means that the user may open this connection easily, in particular without a specific tool.

In the above mentioned version of the communication item, the lead wire will pass through the first mechanical interface providing the generally fixed connection.

As mentioned above, the necklace as seen in a front view defines a first branch on one side of the pendant and a second branch on the opposite side of a pendant. Now, in a further preferred version of the invention the necklace is provided with an intermediate component positioned at a distance from, preferably opposite to the pendant, wherein the intermediate component connects the first branch of the necklace with the second branch of the necklace.

The intermediate component is preferably exactly opposite to the pendant. In a preferred version this intermediate component is designed as a decorative fake closure of the necklace. It is placed where a closure on a normal necklace would sit, giving the new item the look of a traditional necklace.

Now, in a detailed description of the construction of the inventive communication item it is preferable that the speaker is located in the second branch of the necklace. In the first branch of the necklace the mechanical carrier component, in particular the suspension strand, runs along with or integrated with the lead wire while in the second branch of the necklace the lead wire runs to the speaker separate from the mechanical carrier component, in particular the suspension strand, so that the speaker can be moved to the ear of a user. The speaker can be dislodged from the strand and the lead wire can be bent, so that the speaker can be inserted into the ear or clipped to the earlobe.

In a further preferred version of this construction it is provided that the lead wire runs to the speaker from the intermediate component.

As far as the construction of the communication item as a communication jewelry item is concerned, in the present version it is preferable that in the second branch of the necklace the decorative component is positioned on the lead wire while the mechanical carrier component, in particular the suspension strand, is free from a decorative component.

In order to position the speaker when not in use it is preferably provided that in the necklace, in particular in the second branch of the necklace, the mechanical carrier component has a retaining fixture at an appropriate place to hold the speaker when not in use. In a preferred version thereof the retaining fixture has a semicircular form and/or is provided as a magnet fixture.

Up to now the communication item was discussed in view of a construction with only one speaker (mono-equipment). However, the invention can be realized also for a stereo-equipment. Then there is provided a speaker in each of the two branches of the necklace. A similar construction for the second speaker as for the first speaker is available.

Now, preferred embodiments of the invention are described with reference to the drawings. In the drawings
- Fig. 1: shows a schematic view of a communication item in the form of a pendant on a necklace,
- Fig. 2: shows an enlarged perspective view of the pendant of Fig. 1,
- Fig. 3: shows the first cover and the decorative component of the pendant according to Fig. 2,
- Fig. 4: shows the core element of the communication module of the item of Fig. 1,
- Fig. 5: shows the rear cover of the housing of the pendant according to Fig. 2,
- Fig. 6: shows the item of Fig. 1 with the speaker dislodged from the necklace,
- Fig. 7: shows in a schematic view similar to Fig. 1 a communication item with two speakers and
- Fig. 8: shows the communication item of Fig. 7 with both speakers dislodged from the necklace.

The invention relates to communication item as explained in the introductory part of the description. Also, the definitions in the introductory part of the description shall apply throughout the complete patent application.

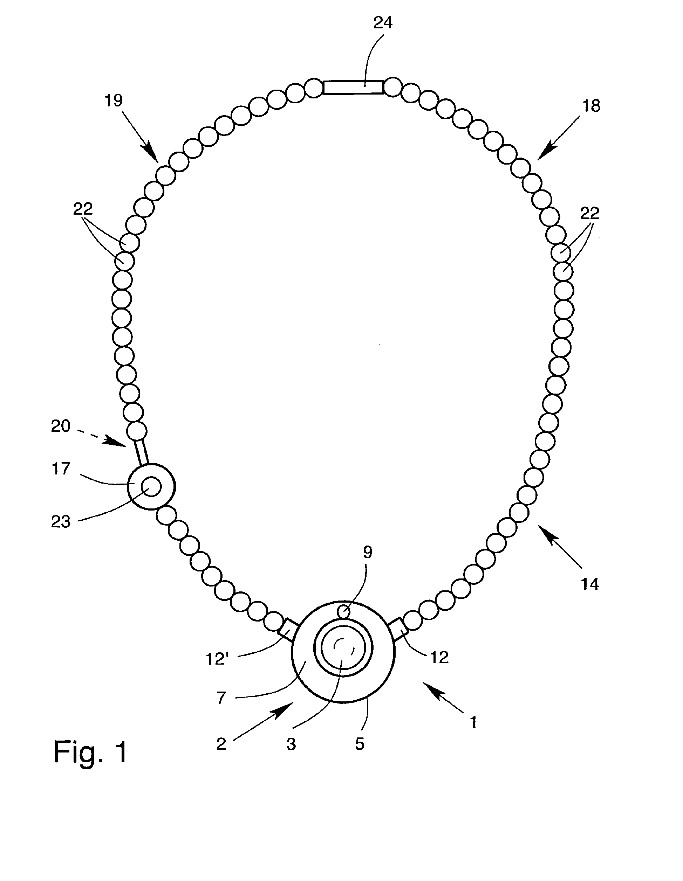

Fig. 1 to 5 shows a first embodiment of an inventive item with all its components.

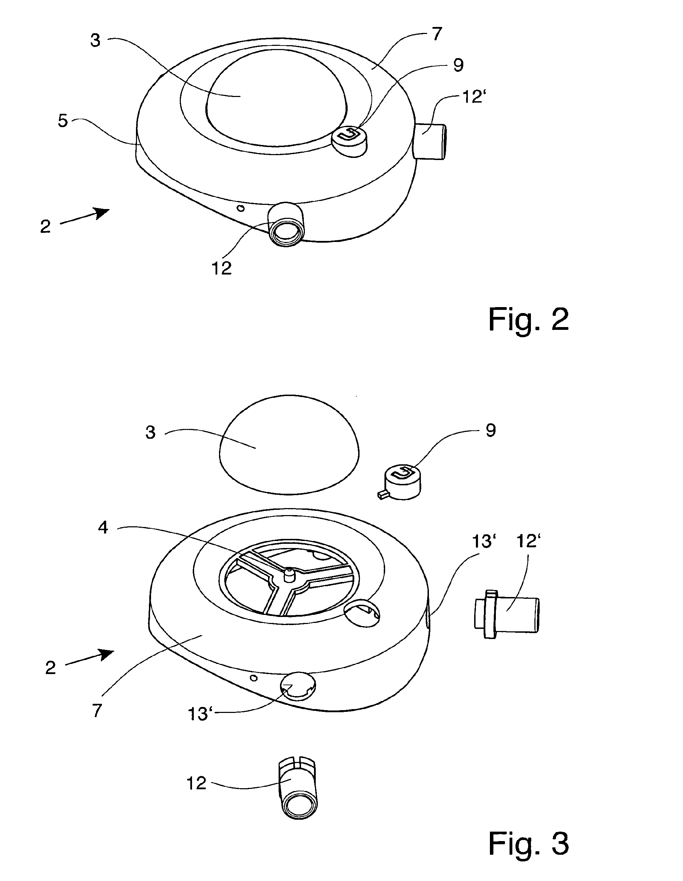

The pendant 1 comprises here at least two components. There is at least one mechanical carrier component 2 and at least one decorative component 3. In Fig. 3 the different components can be seen in a kind of explosion view.

The decorative component 3 is separate from the mechanical carrier component 2, but is normally mechanically connected to the mechanical carrier component 2. In Fig. 3 a connecting pin 4 can be seen on the mechanical carrier component 2 which serves to connect the jewelry component 3, here a half pearl, to the mechanical carrier component 2.

In an alternative version the decorative component 3 can also be formed directly on a front face of the mechanical carrier component 2.

Here the mechanical carrier component 2 comprises a housing 5 formed by a rear cover 6 and a front cover 7 attached to the rear cover 6.

In the embodiment of Fig. 1-6 the decorative component 3, namely a half pearl, is separate from, but mechanically connected to the front cover 7 of the housing 5. The connecting pin 4 is positioned in the middle of the front cover 7.

Instead of above mentioned design a decorative component can also be an accessory formed directly on a front face of the housing.

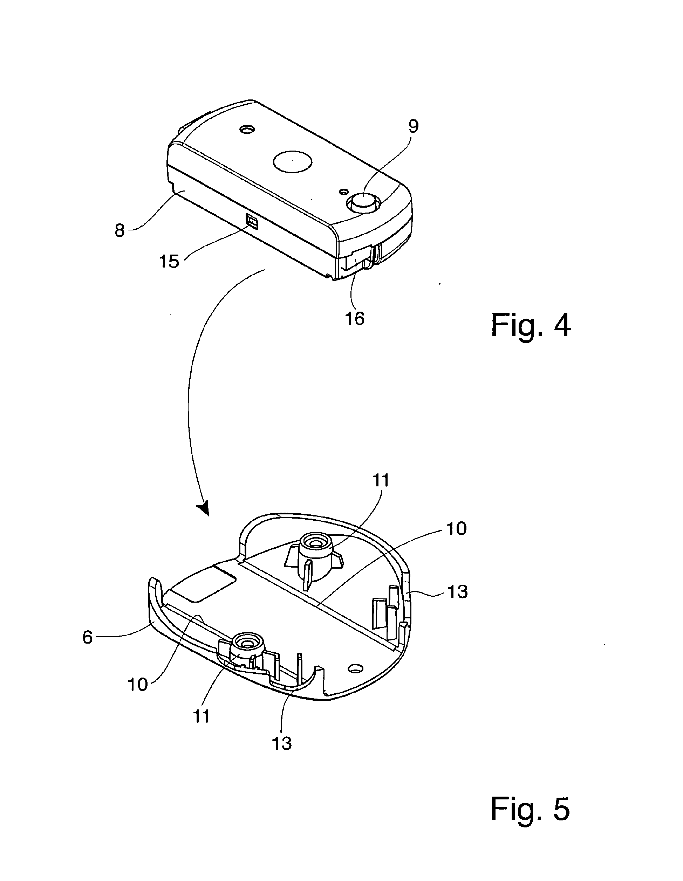

From Fig. 2 to 5 it can be obtained that the decorative component 3 is separate from, but mechanically connected to the front cover 7 or is formed directly on the front cover 7, and a communication module or at least a major component of a communication module is integrated into the pendant 1. To this end there is fixedly positioned in the housing 5 at least a core element 8 of the communication module. The arrow in Fig. 4 to Fig. 5 indicates where the core element 8 is seated in the rear cover 6.

In the introductory part of the description the core element 8 was defined. This core element 8 has a housing and in the housing a chip-set for the electronics of the communication module, in particular including the data storage memory for the first version of the communication module (e.g. MP-3 player) and/ or of the wireless communication link established by the communication module in the second, preferred, version of the communication module. Such a core element 8 is a mass production standard item. A typical Bluetooth core element 8 will have a length of about 40 mm, a width of about 18 mm and a height of about 11 mm. Future Bluetooth core elements 8 will have smaller dimensions. The core element 8 is the "heart" of the communication module. In the preferred second version it establishes the short-range wireless communication link based on a typical standard like Bluetooth, Wi-Fi, IR or the like (see the prior art mentioned above). For components like antenna, receiver, transmitter etc. reference is made to the prior art mentioned above.

The housing 5 further has a number of access points to provide access to functional elements 9 of the core element 8. Those functional elements 9 are e.g. an on/off button or multi function button, a volume button, an indicator light and a power jack for recharging the battery in the core element 8.

Fig. 1 to 3 shows the access point for functional element 9 (on/off button) - here designed as a decorative part of the item 1 on the front cover 7.

Fig. 5 shows a perspective view of the rear cover 6. It is provided with fixation means 10 for positioning the core element 8 in the housing 5. The fixation means 10 here are forms, namely side rails, on the internal surface of the rear cover 6 of the housing 5. It can be seen that the housing of the core element 8 fits exactly between the fixation means 10. Similar fixation means may be provided on the internal surface of the front cover 7.

Fig. 5 also shows bosses 11 on the rear cover 6 where mounting screws can be positioned to connect the front cover 7 to the rear cover 6.

The core element 8 as the heart of the communication module may be a standard element. Other components of the communication module should be standard components also, e.g. the microphone (if used), the speaker, the battery pack and usual interface elements.

In the preferred version of the embodiment of Fig. 1 to 6 the rear cover 6 and/or the front cover 7 of the housing 5 is/are provided with mechanical interfaces 12, 12' for connecting the housing 5 to other components of the item 1. In Fig. 5 parts of the mechanical interfaces 12, 12' can be seen on the rear cover 6 in the form of openings 13 at the sides of the rear cover 6. In Fig. 3 similar openings 13' aligned with the openings 13 in the rear cover 6 can be seen on the front cover 7.

Fig. 1 of the drawings shows a necklace 14 provided separate from the housing 5 with the housing 5 being mechanically connected to, however preferably detachable from the necklace 14. The necklace 14 allows to place the pendant 1 with its housing 5 in the suitable position around the neck of a bearer.

In particular Fig. 4 of the drawings discloses a specific construction in that the core element 8, optionally in combination with the rear cover 6 and/or the front cover 7 of the housing 5, is provided with electrical interfaces 15 for connecting with a microphone 16 and/or a speaker 17 and/or other electronic components of the communication module. In the embodiment of Fig. 1 to 6 the microphone 16 is integrated in the core element 8 (Fig. 4) while there is the electrical interface 15 for the speaker 17 at the side of the housing of the core element 8.

In Fig. 1 the speaker 17 can be seen on the necklace 14. A typical overall length of a necklace 14 is around 70 to 100 cm with the distance between housing 5 and speaker 17 being around 60 to 80 cm.

In the present invention a battery pack is integrated into the core element 8. It can also be separate from the core element 8. However, it should be positioned in the housing 5.

Fig. 1 to 6 show a first embodiment of the invention with one speaker 17.

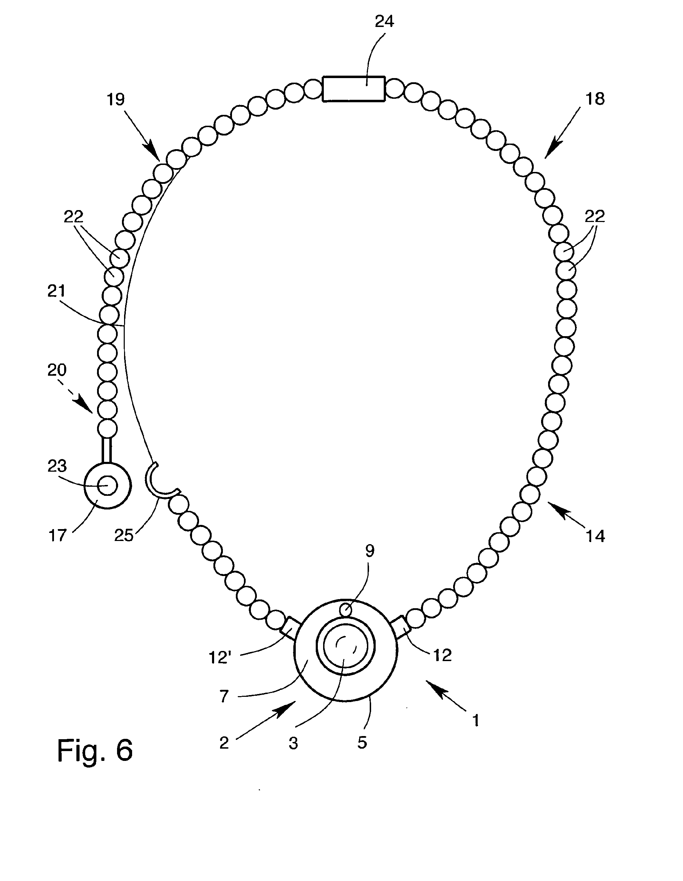

As said, the housing 5 is provided with at least one mechanical interface connecting the housing 5 to the necklace 14. The necklace 14, as seen in a front view, defines a first branch 18 on the right side of the pendant 1 in Fig. 1 and 6 and a second branch 19 on the left side of the pendant 1 in Fig. 1 and 6.

The drawing shows that in the inventive communication item which is not necessarily a communication jewelry item, the speaker 17 is positioned in one branch, here in the second branch 19 of the necklace 14, and a lead wire 20 is integrated into the necklace 14. The lead wire 20 runs from the speaker 17 through the mechanical interface 12 to the core element 8 in the housing 5.

A comparison of Fig. 1 and Fig. 6 shows that for actual use the speaker 17 while still connected to the lead wire 20 can be dislodged from the necklace 14 and put into or close to the ear of a user generally without moving the pendant 1.

The above mentioned concept is comfortable for the user. The pendant 1 can remain where it is and this is a position where a microphone 16 within the housing 5 is well placed relative to the mouth of the user. Nevertheless, the speaker 17 can be comfortably moved from its rest position on the necklace 14 to the use position in or at the ear of the user.

Above it was already explained that the communication item according to the invention can be modified to be a communication jewelry item. So the pendant 1 may be decorated with a decorative component 3.

In the present embodiment it is further provided that the necklace 14 comprises a mechanical carrier component 21, preferably in the form of a suspension strand, and preferably a decorative component 22, preferably on the mechanical carrier component 21. Here, the decorative component 22 is a chain of pearls on the suspension strand 21 of the necklace 14.

Further, in the present embodiment the speaker 17 itself has a decorative component 23 on its front face. So an ear-plug or ear-clip or the like is on the rear of the speaker 17.

In the preferred embodiment shown in Fig. 1 and 6 the necklace 14 is provided with an intermediate component 24 positioned at a distance from, preferably opposite to the pendant 1. The intermediate component 24 connects the first branch 18 of the necklace 14 to the second branch 19 of the necklace 14. In this construction it is provided the intermediate component 24 is designed as a decorative fake closure of the necklace 14. So the construction of the inventive communication item closely resembles the look of a traditional necklace with the closure positioned opposite to the pendant 1.

Now, in a particularly preferred embodiment of the invention it is provided that the speaker 17 is located in the second branch 19 of necklace 14, in the first branch 18 of the necklace 14 the mechanical carrier component 21, in particular the suspension strand, runs along with or integrated with the lead wire 20 while in the second branch 19 of the necklace 14 the lead wire 20 runs to the speaker 17 separate from the mechanical carrier component 21 in particular the suspension strand, so that the speaker 17 can be moved to the ear of a user.

In the present embodiment which has above mentioned intermediate component 24, the fake closure, the intermediate component 24 serves as a separating piece separating the branches 18, 19 of the necklace 14.

As explained above the communication item according to the invention is not necessarily a communication jewelry item. However, in the present embodiment, the communication item indeed is a communication jewelry item.

The construction shown in Fig. 1 and 6 is a specific one in that in the second branch 19 of the necklace 14 the decorative component 22, here a chain of pearls, is positioned on the lead wire 20 while the mechanical carrier component 21, in particular the suspension strand, is free from a decorative jewelry component.

Further, as can be seen from a comparison of Fig. 1 and Fig. 6, on the necklace 14 there is provided a retaining fixture 25 for the speaker 17. The retaining fixture 25 is located at an appropriate place on the suspension strand 21 of the necklace 14 so that it can hold the speaker 17 when not in use (Fig. 1). The retaining fixture 25 here is in the second branch 19. In a preferred embodiment of the invention the retaining fixture 25 holds the speaker 17 by magnetic force. In the present embodiment the retaining fixture 25 has an elegant semicircular form.

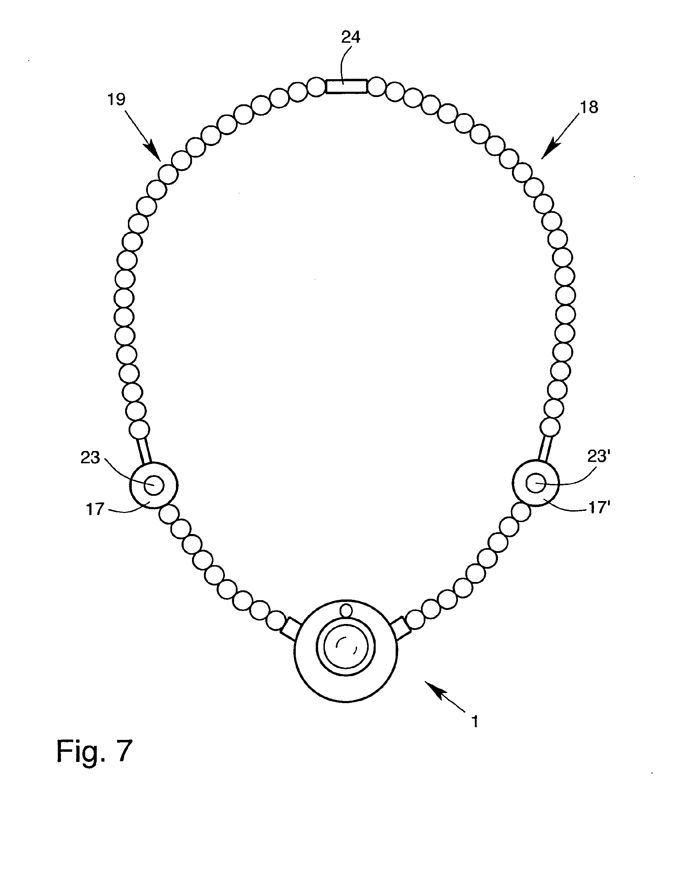

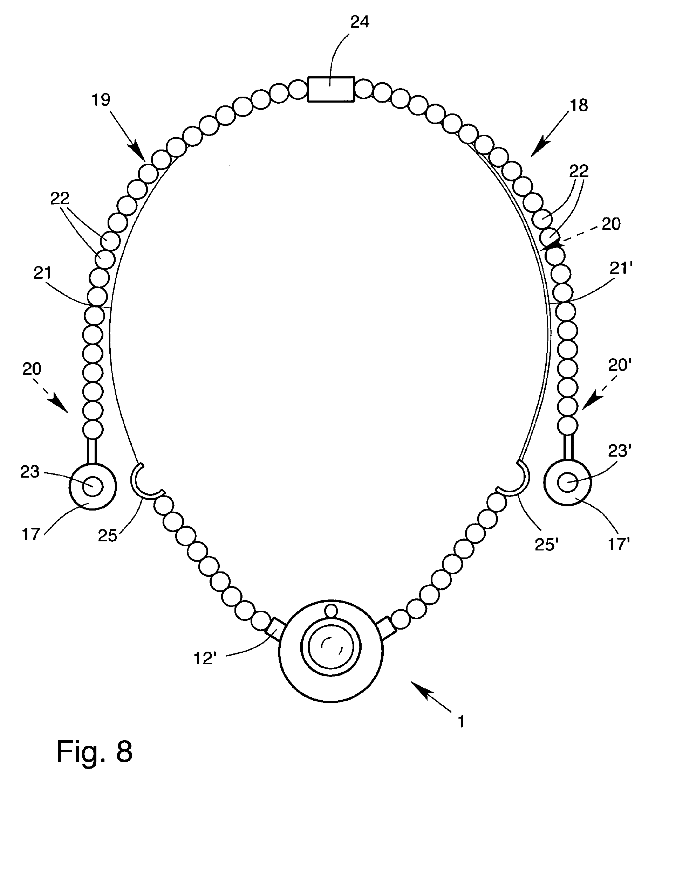

Fig. 7 and 8 show a second embodiment with two speakers 17, 17' in both branches 19, 18 of the necklace 14. This communication item is useful for stereo listening. This may be particularly interesting for a music player like an MP-3 player. It is less important for a communication item that has the characteristics of a headset for a mobile phone.

For the embodiment of Fig. 7 and 8 it is preferably provided that in the first branch 18 of the necklace 14 the mechanical carrier component 21, in particular the suspension strand, runs along with or integrated with the lead wire 20 while in the second branch 19 of the necklace 14 the lead wire 20 runs to the speaker 17 separate from the mechanical carrier component 21, in particular the suspension strand, so that the speaker 17 can be moved to the ear of a user, further, in the first branch 18 a second lead wire 20' runs to the speaker 17' separate from the mechanical carrier component 21', in particular the suspension strand, so that also the second speaker 17' can be moved to the ear of the user. Both speakers 17, 17' are provided with decorative components 23, 23'.

The microphone 16 of the communication module is in the present invention preferably positioned in the housing 5. This is the "natural" location of the microphone 16. However, it is technically possible to place the microphone 16 at other locations, e.g. somewhere on the necklace 14 or at a separate place connected via short-range wireless communication.

The present patent application is one of the following related applications:
- EP .......... "System of jewelry items" Attorney-reference; 09.0478.2
- EP .......... "Hand wearable controller for a remotely located electronic device" Attorney-reference: 10.0019.2
- EP .......... "Communication item " Attorney-reference: 10.0020.2
- EP .......... "Communication item as a pendant on a choker" Attorney-reference: 10.0084.2
- EP .......... "Communication item as a pendant on a necklace" Attorney-reference 10.0085.2
- EP .......... "Communication item" Attorney reference 10.0086.2

## Claims

1. Communication item in the form of a pendant (1) on a necklace (14), wherein a communication module is integrated into the communication item, wherein the communication module comprises at least a core element (8) and a speaker (17) and optionally a microphone (16),
wherein the pendant (1) comprises a housing (5) with at least the core element (8) of the communication module positioned in the housing (5),
wherein the housing (5) is provided with at least one mechanical interface (12, 12') connecting the housing (5) to the necklace (14), and
wherein the necklace (14) in a front view defines a first branch (18) on one side of the pendant (1) and a second branch (19) on the opposite side of the pendant (1),
**characterized in that**
the speaker (17) is positioned in one branch of the necklace (14) and a lead wire (20) is integrated into the necklace (14), the lead wire (20) running from the speaker (17) through the mechanical interface (12) to the core element (8) in the housing (5),
and for actual use the speaker (17) while still connected to the lead wire (20) can be dislodged from the necklace (14) and put into or close to the ear of a user generally without moving the pendant (1).

2. Communication item according to claim 1, **characterized in that** the pendant (1) comprises the housing (5) and at least one decorative component (3) which is separate from, but mechanically connected to a front side of the housing (5) or is formed directly on the housing (5).

3. Communication item according to any one of the preceding claims, **characterized in that**
the necklace (14) comprises a mechanical carrier component (21), preferably in the form of a suspension strand, and preferably a decorative component (22), preferably on the mechanical carrier component (21).

4. Communication item according to any one of the preceding claims, **characterized in that**
the speaker (17) is constructed as or provided with a decorative component (23).

5. Communication item in the form of a pendant (1) on a necklace (14), wherein a communication module is integrated into the communication item, wherein the communication module comprises at least a core element (8) and a speaker (17) and optionally a microphone (16),
wherein the pendant (1) comprises a housing (5) with at least the core element (8) of the communication module positioned in the housing (5),
wherein the housing (5) is provided with at least one mechanical interface (12, 12') connecting the housing (5) to the necklace (14), and
wherein the necklace (14) in a front view defines a first branch (18) on one side of the pendant (1) and a second branch (19) on the opposite side of the pendant (1),
in particular an item according to any one of the preceding claims, **characterized in that**
the housing (5) is provided with a first mechanical interface (12) providing a generally fixed connection with one end of the necklace (14) and with a second mechanical interface (12') providing a detachable connection with the other end of the necklace (14).

6. Communication item according to claim 5, **characterized in that** the second mechanical interface (12') is a magnetic joint.

7. Communication item according to any one of the preceding claims, **characterized in that**
the necklace (14) is provided with an intermediate component (24) positioned at a distance from, preferably opposite to the pendant (1), wherein the intermediate component (24) connects the first branch (18) of the necklace (14) with the second branch (19) of the necklace (14).

8. Communication item according to claim 7, **characterized in that** the intermediate component (24) is designed as a decorative fake closure of the necklace (14).

9. Communication item according to claim 1 and optionally to any other one of the preceding claims, **characterized in that**
the speaker (17) is located in the second branch (19) of necklace (14),
in the first branch (18) of the necklace (14) the mechanical carrier component (21), in particular the suspension strand, runs along with or integrated with the lead wire (20) while in the second branch (19) of the necklace (14) the lead wire (20) runs to the speaker (17) separate from the mechanical carrier component (21), in particular the suspension strand, so that the speaker (17) can be moved to the ear of a user.

10. Communication item according to claim 7 or 8 and claim 9, **characterized in that**
the lead wire (20) runs to the speaker (17) from the intermediate component (24).

11. Communication item according to claim 3 and claim 9 or 10, **characterized in that**
in the second branch (19) of the necklace (14) the decorative component (22) is positioned on the lead wire (20) while the mechanical carrier component (21), in particular the suspension strand, is free from a decorative component.

12. Communication item according to claim 1 and optionally to any other one of the preceding claims, **characterized in that**
in the necklace (14), in particular in the second branch (19) of the necklace (14), the mechanical carrier component (21) has a retaining fixture (25) at an appropriate place to hold the speaker (17) when not in use.

13. Communication item according to claim 12, **characterized in that** the retaining fixture (25) has a semicircular form and/or is provided as a magnet fixture.

14. Communication item according to claim 1 and optionally to any other one of the preceding claims, **characterized in that**
the necklace (14) has a speaker (17, 17') in each of the two branches (18, 19).

15. Communication item according to claim 14, **characterized in that** in the first branch (18) of the necklace (14) the mechanical carrier component (21), in particular the suspension strand, runs along with or integrated with the lead wire (20) while in the second branch (19) of the necklace (14) the lead wire (20) runs to the speaker (17) separate from the mechanical carrier component (21), in particular the suspension strand, so that the speaker (17) can be moved to the ear of a user,
further, in the first branch (18) a second lead wire (20') runs to the speaker (17') separate from the mechanical carrier component (21'), in particular the suspension strand, so that also the second speaker (17') can be moved to the ear of the user.

## Amended claims

### Amended claims in accordance with Rule 137(2) EPC.

**1.** Communication item in the form of a pendant (1) on a necklace (14),
wherein a communication module is integrated into the communication item,
wherein the communication module comprises at least a core element (8) and a speaker (17) and optionally a microphone (16),
wherein the pendant (1) comprises a housing (5) with at least the core element (8) of the communication module positioned in the housing (5),
wherein the housing (5) is provided with at least one mechanical interface (12, 12') connecting the housing (5) to the necklace (14),
wherein the necklace (14) in a front view defines a first branch (18) on one side of the pendant (1) and a second branch (19) on the opposite side of the pendant (1),
wherein the speaker (17) is positioned in one branch of the necklace (14), and
wherein a lead wire (20) is integrated into the necklace (14), the lead wire (20) running from the speaker (17) through the mechanical interface (12) to the core element (8) in the housing (5),
**characterized in that**
the housing (5) is provided with a first mechanical interface (12) providing a generally fixed connection with one end of the necklace (14) and with a second mechanical interface (12') providing a detachable connection with the other end of the necklace (14), and
the lead wire (20) passes through the first mechanical interface (12) providing the generally fixed connection.

**2.** Communication item according to claim 1, **characterized in that** the second mechanical interface (12') is a magnetic joint.

**3.** Communication item according to claim 1 or 2, **characterized in that** for actual use the speaker (17) while still connected to the lead wire (20) can be dislodged from the necklace (14) and put into or close to the ear of a user generally without moving the pendant (1).

**4.** Communication item according to any one of the preceding claims, **characterized in that**
the pendant (1) comprises the housing (5) and at least one decorative component (3) which is separate from, but mechanically connected to a front side of the housing (5) or is formed directly on the housing (5),

**5.** Communication item according to any one of the preceding claims, **characterized in that**
the necklace (14) comprises a mechanical carrier component (21), preferably in the form of a suspension strand, and preferably a decorative component (22), preferably on the mechanical carrier component (21).

**6.** Communication item according to any one of the preceding claims, **characterized in that**
the speaker (17) is constructed as or provided with a decorative component (23).

**7.** Communication item according to any one of the preceding claims, **characterized in that**
the necklace (14) is provided with an intermediate component (24) positioned at a distance from, preferably opposite to the pendant (1), wherein the intermediate component (24) connects the first branch (18) of the necklace (14) with the second branch (19) of the necklace (14).

**8.** Communication item according to claim 7, **characterized in that**
the intermediate component (24) is designed as a decorative fake closure of the necklace (14).

**9.** Communication item according to claim 5 and optionally to any one of claims 6 to 8, **characterized in that**
the speaker (17) is located in the second branch (19) of the necklace (14),
in the first branch (18) of the necklace (14) the mechanical carrier component (21), in particular the suspension strand, runs along with or integrated with the lead wire (20) while in the second branch (19) of the necklace (14) the lead wire (20) runs to the speaker (17) separate from the mechanical carrier component (21), in particular the suspension strand, so that the speaker (17) can be moved to the ear of a user.

**10.** Communication item according to claim 7 or 8 and claim 9, **characterized in that**
the lead wire (20) runs to the speaker (17) from the intermediate component (24).

**11.** Communication item according to claim 5 and claim 9 or 10, **characterized in that**
in the second branch (19) of the necklace (14) the decorative component (22) is positioned on the lead wire (20) while the mechanical carrier component (21), in particular the suspension strand, is free from a decorative component.

**12.** Communication item according to claim 5 and optionally to any one of claims 6 to 11, **characterized in that**
in the necklace (14), in particular in the second branch (19) of the necklace (14), the mechanical carrier component (21) has a retaining fixture (25) at an appropriate place to hold the speaker (17) when not in use.

**13.** Communication item according to claim 12, **characterized in that**
the retaining fixture (25) has a semicircular form and/or is provided as a magnet fixture.

**14.** Communication item according to any one of the preceding claims, **characterized in that**
the necklace (14) has a speaker (17, 17') in each of the two branches (18, 19),

**15.** Communication item according to claim 14, **characterized in that**
in the first branch (18) of the necklace (14) the mechanical carrier component (21), in particular the suspension strand, runs along with or integrated with the lead wire (20) while in the second branch (19) off the necklace (14) the lead wire (20) runs to the speaker (17) separate from the mechanical carrier component (21), in particular the suspension strand, so that the speaker (17) can be moved to the ear of a user,
further, in the first branch (18) a second lead wire (20') runs to the speaker (17') separate from the mechanical carrier component (21'), in particular the suspension strand, so that also the second speaker (17') can be moved to the ear of the user.
